# EUROPEAN PATENT APPLICATION

(11) **EP 2 465 675 A1**
(43) Date of publication of application: **20.06.2012**
(21) Application number: 11191332.3
(22) Date of filing: 30.11.2011
(51) Int. Cl.: B32B 15/08, B32B 15/14, B32B 15/18, B32B 15/20, C08J 5/24, E04C 2/26, C08J 5/12

(54) **Multiple-bonding material**

(30) Priority: 14.12.2010 KR 20100127682
(71) Applicant: Sin Yeong Co., Ltd., Yeongcheon-si (KR)
(72) Inventor: Seo, Jong-Dock, Daegu-si (KR); Yu, Byoung-Rae, Ansan-si (KR); Hwang, Jin-Man, Ansan-si (KR)
(74) Representative: Jordan, Volker Otto Wilhelm

(57) **Abstract**

A multiple-bonding material applicable to a transportation vehicle is provided. The multiple-bonding material includes a metal plate and a composite. The composite is bonded to one surface of the metal plate, and includes a reinforcement material and a resin composition to bond the reinforcement material to the metal plate, wherein the reinforcement material is formed as a woven or non-woven fabric and disposed on the surface of the metal plate. Accordingly, the multiple-bonding material has improved rigidity and advantage in lighting of the vehicle, and can enhance impact and sound absorption and damping performance.

## Description

### CROSS-REFERENCE TO RELATED APPLICATION

This application claims priority from and the benefit under 35 U.S.C. §119(a) of Korean Patent Application No. 10-2010-0127682, filed on December 14, 2010, which is herby incorporated by reference for all purposes as if fully set forth herein.

### BACKGROUND

### 1. FIELD

The following description relates to a multiple-bonding material applicable to a transportation vehicle.

### 2. DISCUSSION OF THE BACKGROUND

In recent years, with the growing demand for resource and energy saving, machines and structures become lighter. Weight reduction of the machines and the structures is closely related not only to functional characteristics of the machines and structures, but also to economic feasibility to produce them, and it is therefore not possible to implement weight reduction without considering the economic feasibility. Remarkable economical effects of the weight reduction can be obtained in transportation machines, and the weight reduction has started in the field of aircraft manufacturing, and is extended to the fields of vehicles, railroad cars, and vessels.

The weight reduction of a vehicle has drawn most attention as one of fuel efficiency improvement techniques, and in this regard various aspects including component reduction, structure enhancement, and lighter materials have been studied and developed. In particular, the weight reduction of a vehicle material improves engine efficiency, thereby maximizing the performance of the vehicle, and contributing to increase in fuel efficiency. Thus, the weight reduction is the most appropriate and effective method for environmental pollution reduction and fuel saving.

### SUMMARY

Exemplary embodiments of the present invention provide a multiple-bonding material that is superior in rigidity and advantageous in weight reduction, and has improved impact and sound absorption and damping performance.
Additional features of the invention will be set forth in the description which follows, and in part will be apparent from the description, or may be learned by practice of the invention.

Exemplary embodiments of the present invention provide a multiple-bonding material including: at least one metal plate; and at least one composite configured to be bonded to one surface of the metal plate, and comprise a reinforcement material formed as a woven or non-woven fabric and disposed on the surface of the metal plate and a resin composition to bond the reinforcement material to the metal plate.
It is to be understood that both forgoing general descriptions and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.
FIG. 1 is a diagram illustrating a cross-sectional view of a multiple-bonding material according to an exemplary embodiment of the present invention.
FIG. 2 is a diagram illustrating an enlarged view of an area A illustrated in FIG. 1.
FIG. 3 is a diagram illustrating a cross-sectional view of a multiple-bonding material according to another exemplary embodiment of the present invention.
FIG. 4 is a diagram illustrating a cross-sectional view of a multiple-bonding material according to another exemplary embodiment of the present invention.

### DETAILED DESCRIPTION OF THE ILLUSTRATED EMBODIMENTS

The invention is described more fully hereinafter with references to the accompanying drawings, in which exemplary embodiments of the invention are shown. This invention may, however, be embodied in many different forms and should not be construed as limited to the embodiments set forth herein. Rather, these exemplary embodiments are provided so that this disclosure is thorough, and will fully convey the scope of the invention to those skilled in the art. Throughout the drawings and the detailed description, unless otherwise described, the same drawing reference numerals are understood to refer to the same elements, features, and structures. The relative size and depiction of these elements may be exaggerated for clarity, illustration, and convenience.

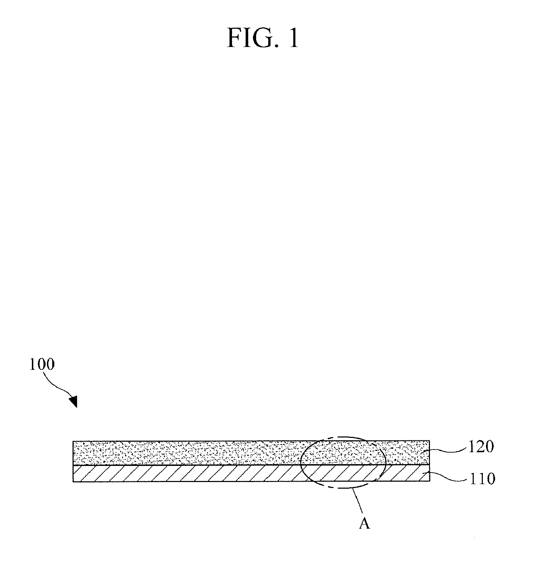

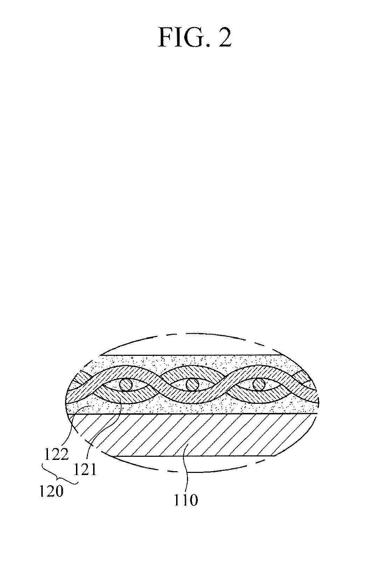

FIG. 1 is a diagram illustrating a cross-sectional view of a multiple-bonding material according to an exemplary embodiment of the present invention. FIG. 2 is a diagram illustrating an enlarged view of an area A illustrated in FIG. 1.

Referring to FIGS. 1 and 2, multiple-bonding material 100 may include a metal plate 110 and a composite 120.

The metal plate 110 functions as a base member to which the composite 120 can be bonded. The metal plate 110 may be made of steel, aluminum, or aluminum alloy. The composite 120 may be formed of a reinforcement material 121 and a resin composition 122, and be bonded to a surface of the metal plate 110. The reinforcement material 121 may be formed as a woven or non-woven fabric and disposed on one surface of the metal plate 110.

The resin composition 122 may be provided for bonding the reinforcement material 121 to the metal plate 110. For example, a contact (bonding) surface of each of the reinforcement material 121 and the metal plate 110 is coated with the resin composition 122. The reinforcement material 121 coated with the resin composition 122 and the metal plate 110 coated with the resin composition 122 are cohered to each other, and then the resin composition 122 is cured. As a result, the reinforcement material 121 can remain bonded to the metal plate 110 by the resin composition 122.

The multiple-bonding material 100 includes the metal plate 110 bonded with the reinforcement material 121, which is formed as a woven or non-woven fabric, via the resin composition 122. Thus, in comparison with a structure having only a metal plate, a structure of the multiple-bonding material 100 is lighter and superior in rigidity for the same thickness.

In addition, the composite 120 includes the reinforcement material 121 formed as a woven or non-woven fabric and the resin composition 122, and can hence improve impact absorption, sound absorption, and damping performance. Accordingly, the multiple-bonding material 100 may be applicable to transportation vehicles, and particularly to, for example, a bumper, a floor panel, a wheel house or any part of a vehicle that requires weight reduction, and thereby contributing to weight reduction of a vehicle body.

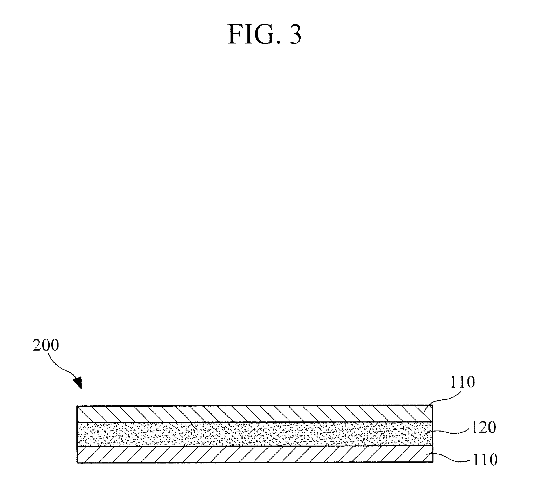

As illustrated in FIG. 3, a multiple-bonding material 200 may include two metal plates 110 and a composite 120 which is interposed and bonded between the metal plates 110. The multiple-bonding material 200 may be more suitable to a field that requires a higher rigidity.

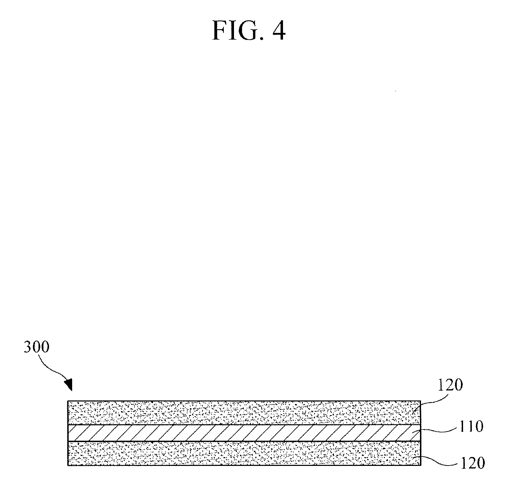

As another example, as illustrated in FIG. 4, a multiple-bonding material 300 may include a metal plate 110 and two composites 120 which are coupled to each surface of the metal plate 110. The multiple-bonding material 300 may be more suitable to a field that requires enhanced impact and sound absorption and damping performance.

Further, the reinforcement material 121 may be one of various substances. For example, the reinforcement material 121 may be formed as a woven or non-woven fabric made of one of a nylon fiber, a polyester fiber, a nylon/polyester composite fiber, a nylon/rayon composite fiber, a polyester/rayon composite fiber, an aramid fiber, a carbon fiber, a glass fiber, and a metal fiber. In addition, the reinforcement material 121 can be made of other substances that fall within the scope of implementation of the above examples, and thus the substances of the reinforcement material 121 is not limited to the aforementioned fibers.

The reinforcement material 121 as a woven or non-woven fabric may have a structure having phenolic resin impregnated therein so as to enhance cohesion between the fibers. In addition, in the case in which welding is required, the reinforcement material 121 may include at least one of a metal fiber, metal powder, and an anti-static agent, and thus can be welded.

The resin composition 122 may include a primary resin, a curing agent, a filler agent, a diluent, and an additive. The primary resin may be one of fibers made of epoxy resin, carboxyl terminated butadiene acrylonitrile (CTBN)/urethane/epoxy modified resin, polyurethane, phenol, acryl, and unsaturated polyester, or a mixed fiber of the above materials.

The curing agent for epoxy resin and epoxy modified resin may be dicyanodiamide, and may use an imidazole curing agent when it is required to accelerate curing process or low-temperature curing is needed. The filler agent functions to improve mechanical characteristics, lightness, damping performance, and impact absorption of the cured resin. The filler agent may be at least one of silica, calcium carbonate, low-density filler, a variety of polymer compound powders, a organic foaming agent, and talc.

The diluent is included in the resin or a curing agent to lower viscosity and enhance workability. The diluent may be polyoxypropylene diglycidyl ether (PPCDGE). The additive may be a conductive carbon to provide conductivity. In addition, the additive may be an anti-static agent. The resin composition 122 may further include plasticizer. The plasticizer provides the resin with flexibility and elasticity, allowing the resin to be molded more easily.

As illustrated in the above examples, a multiple-bonding material includes a metal plate to which a reinforcement material formed as a woven or non-woven fabric is bonded via a resin composition. Thus, in comparison with a structure comprising only a metal plate, a structure of the multiple-bonding material is lighter and superior in rigidity for the same thickness.

Further, a composite includes a reinforcement material formed as a woven or non-woven fabric and a resin composition, and thus can improve impact and sound absorption and damping performance in comparison with a structure comprising only a metal plate. Thus, the multiple-bonding material may contribute to weight reduction of a vehicle.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.

A multiple-bonding material applicable to a transportation vehicle is provided. The multiple-bonding material includes a metal plate and a composite. The composite is bonded to one surface of the metal plate, and includes a reinforcement material and a resin composition to bond the reinforcement material to the metal plate, wherein the reinforcement material is formed as a woven or non-woven fabric and disposed on the surface of the metal plate. Accordingly, the multiple-bonding material has improved rigidity and advantage in lighting of the vehicle, and can enhance impact and sound absorption and damping performance.

## Claims

1. A multiple-bonding material comprising:
at least one metal plate; and
at least one composite configured to be bonded to one surface of the metal plate, and comprise a reinforcement material formed as a woven or non-woven fabric and disposed on the surface of the metal plate and a resin composition to bond the reinforcement material to the metal plate.

2. The multiple-bonding material of claim 1, wherein two metal plates are provided and the composite is interposed between the metal plates and bonded to each of the metal plates.

3. The multiple-bonding material of claim 1, wherein there are provided two composites and the composites are bonded to each surface of the metal plate.

4. The multiple-bonding material of one of claims 1 to 3, wherein the reinforcement material is one of a nylon fiber, a polyester fiber, a nylon/polyester composite fiber, a nylon/rayon composite fiber, a polyester/rayon composite fiber, an aramid fiber, a carbon fiber, a glass fiber, and a metal fiber, or a mixed fiber thereof.

5. The multiple-bonding material of claim 4, wherein the reinforcement material has a phenolic resin impregnated therein and enhances cohesion.

6. The multiple-bonding material of claim 5, wherein the reinforcement material comprises at least one of a metal fiber, metal powder, and an anti-static agent and thus has weldability.

7. The multiple-bonding material of claim 4, wherein the resin composition comprises a primary resin, a curing agent, a filler agent, a diluent, and an additive.
